# FASCICULE DE BREVET EUROPEEN

(11) **EP 4 450 547 B1**
(45) Date de publication et mention de la délivrance du brevet: **27.08.2025**
(21) Numéro de dépôt: 24166611.4
(22) Date de dépôt: 27.03.2024
(51) Int. Cl.: C08K 3/16, C08L 29/04, C08L 39/06, G01N 1/02

(54) **COMPOSITION HYDROSOLUBLE À POUVOIR COLLANT**
WASSERLÖSLICHE ZUSAMMENSETZUNG MIT KLEBRIGMACHENDER WIRKUNG
WATER-SOLUBLE TACKIFIER

(30) Priorité: 21.04.2023 FR 2304041
(43) Date de publication de la demande: 23.10.2024
(73) Titulaire: Commissariat à l'Energie Atomique et aux Energies Alternatives, 75015 Paris (FR)
(72) Inventeur: REVOL-CAVALIER, Frédéric, 38054 GRENOBLE Cedex 09 (FR)
(74) Mandataire: INNOV-GROUP

(56) Documents cités:
- EP-A1- 3 591 372
- CN-C- 1 163 145
- US-A1- 2009 196 849

## Description

### Domaine technique de l'invention

La présente invention se rapporte à une composition hydrosoluble, pouvant notamment être utilisée pour la collecte de particules.

### Etat de la technique

La collecte de particules présentes sur une surface est utile pour différentes applications, notamment pour :
- Vérifier l'efficacité d'une décontamination après une pollution,
- Effectuer des analyses sur les particules collectées,
- Vérifier la contamination des conteneurs et des plans de travail employés dans l'industrie agro-alimentaire...

Dans toutes ces applications, il est utile de disposer d'un dispositif qui permet d'effectuer un prélèvement simple et rapide de particules. Par particules, on entend tous types de composés biologiques, comme des bactéries, des molécules d'ADN, des spores, des virus, ou tout autre type de particules, telles que des billes, des poussières, biofilm ou pollen.

Des dispositifs de collecte de particules sont déjà connus dans l'état de la technique. Les solutions les plus courantes utilisent des "cotons tiges" ou des pinceaux qui sont appliqués sur la surface pour prélever les particules présentes. Les particules collectées sont ensuite décrochées de l'outil de prélèvement par immersion dans une solution tampon spécifique. Des kits de détections, en général des bandelettes, sont ensuite utilisés pour déterminer la nature de la contamination. Ces solutions sont performantes dès lors qu'il y a une contamination importante (poudre suspecte, tâche etc...). En revanche, lorsque la contamination est faible, il est nécessaire d'opérer une collecte de plus grande envergure pour augmenter le nombre de particules collectées.

Pour la collecte de particules sur une grande surface, il existe des équipements sous forme d'aspirateur ou de collecteur. Ce type d'équipement comporte un compresseur qui envoie de l'eau stérile sous pression dans une douchette qui décolle les contaminations de la surface traitée (tissu, surface fibreuse, etc...). Une deuxième zone de la douchette permet également de récupérer l'eau chargée de particules par aspiration. L'eau et les particules aspirées sont récupérées dans un réservoir et seront ensuite analysées dans un laboratoire. Ce dispositif est centré sur la récupération d'ADN mais pourrait également être utilisé pour d'autres contaminations (particules, bactéries, spores etc...). Cette solution s'avère cependant particulièrement encombrante.

Une autre technique utilisée dans l'industrie alimentaire pour s'assurer qu'une partie d'une chaine de fabrication est contaminée par des bactéries consiste à utiliser des éponges stériles pour collecter les bactéries après avoir humidifié la zone de collecte par une solution tampon. L'éponge va collecter le liquide déposé avec les bactéries puis le liquide sera récupéré et mis en culture quelques heures ou jours pour vérifier la présence de bactéries. Cependant, dans cette solution, les bactéries peuvent se coller sur la surface du matériau constituant l'éponge (polyuréthane, polypropylène...) et par conséquent ne pas être présente dans le liquide récupéré. Par ailleurs, ces éponges ne sont pas adaptées pour collecter les particules sur de grande surface et peuvent même étaler la contamination d'un endroit A souillé vers un endroit B non souillé. Enfin, l'éponge nécessite souvent d'être humidifiée préalablement à la collecte.

La demande de brevet référencée FR2366554A1 (correspondant US4144760**)** décrit un dispositif de prélèvement utilisant un plastique hydrosoluble qui après humidification dévient collant et permet la capture de particules biologiques sur une surface par apposition. Une fois la capture terminée, le film plastique est solubilisé partiellement ou complétement pour collecter les éléments capturés. Cette technique nécessite une humidification préalable du film plastique pour le dissoudre partiellement et le rendre collant. Cette étape est très délicate car si l'humidification est insuffisante le matériau n'est pas assez collant et si elle est trop importante le matériau se dissout et n'assure plus sa fonction de collecte.

Les documents WO2017/209628A1**,** US2011/256531A1 et US4144760A1 décrivent également des dispositifs de prélèvement.

La demande de brevet EP3591372A1 décrit un dispositif de prélèvement de particules présentes sur une surface. Le dispositif se présente sous la forme d'un rouleau en mousse imprégné d'un matériau hydrosoluble, ce matériau permettant de collecter les particules et de les remettre facilement en solution. Le matériau hydrosoluble se présente sous la forme d'un gel ou film déposé sur la surface du rouleau. A titre d'exemple le gel est une composition qui comporte du polyvinyle alcool (PVA), de l'eau et du glycérol.

Au bout d'une certaine durée de stockage, ce type de gel a tendance à perdre son pouvoir collant, ce qui rend le dispositif inopérant. L'ajout d'un alcool (comme le glycérol) permet de retarder le séchage du film mais ne permet pas de conserver les caractéristiques collantes du film.

Les demandes de brevets US2009/196849A1 et CN116345C décrivent toutes deux des compositions hydrosolubles utilisées dans divers domaines.

Le but de l'invention est de proposer une composition hydrosoluble capable de garder son pouvoir collant au cours du temps, permettant ainsi à un dispositif de collecte de particules utilisant cette composition de pouvoir être utilisé à tous moments, même après un stockage longue durée.

### Exposé de l'invention

Ce but est atteint par l'utilisation d'une composition hydrosoluble pour la collecte de particules sur une surface, ladite composition comportant :
- Une solution de polyvinyle alcool (PVA) ou de Polyvinylpyrrolidone (PVP) ;
- 10 à 50% en masse d'un composé choisi parmi :
   o Un sel choisi parmi CaCl2 et MgCl2 ;

Selon une réalisation particulière, la composition comporte également jusqu'à 50% en masse de glycérol.

De manière avantageuse, la composition comporte : 10% à 20% de polyvinyle alcool (PVA) ou de Polyvinylpyrrolidone (PVP) dans une solution aqueuse, à laquelle on ajoute 20% à 40% en masse de glycérol et 10% à 30% en masse de sel choisi parmi Cacl2 et MgCl2.

De manière préférentielle, la composition comporte :
- 10% de polyvinyle alcool (PVA) ou de Polyvinylpyrrolidone (PVP) dans l'eau, puis
- 30% en masse de glycérol, et
- 20% en masse d'un sel de Cacl2.

L'invention concerne également un dispositif de collecte de particules, comprenant un support présentant une surface de collecte et un matériau de type hydrosoluble déposé sur sa surface de collecte, le matériau hydrosoluble utilisant une composition hydrosoluble telle que définie ci-dessus.

### Brève description des figures

D'autres caractéristiques et avantages vont apparaître dans la description détaillée qui suit faite en regard des dessins annexés dans lesquels :
- Les figures 1A et 1B représentent un exemple de réalisation d'un dispositif de collecte de particules, par exemple réalisé sous la forme d'un rouleau ;
- La figure 2 montre les différentes étapes qui sont mises en œuvre pour une collecte de particules à l'aide du dispositif de collecte de particules représenté sur la figure 1A ;
- La figure 3 montre un diagramme représentant le rendement de collecte en fonction de la durée de stockage d'un dispositif de collecte ;

### Description détaillée d'au moins un mode de réalisation

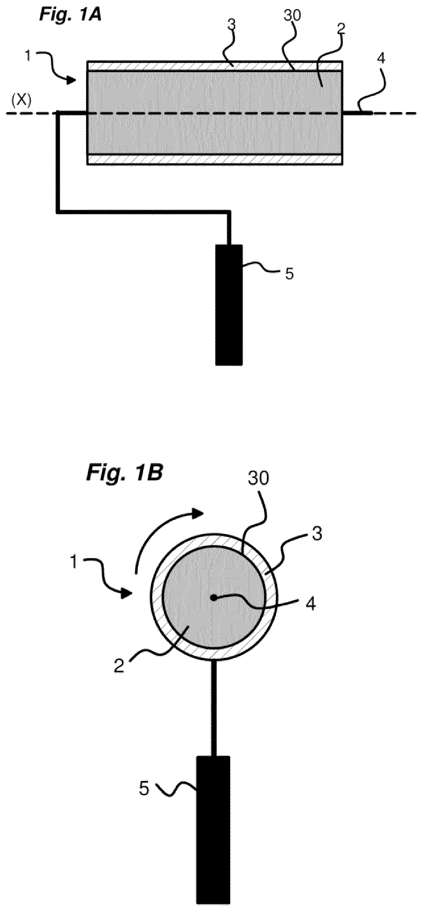

Un dispositif 1 de collecte de particules tel que représenté sur la figure 1A et sur la figure 1B, comporte par exemple un support 2 doté d'une surface de collecte 30. Dans cette réalisation, le support 2 peut être formé d'un rouleau en forme de cylindre de révolution présentant une surface latérale formant ladite surface de collecte 30. Le rouleau peut être monté rotatif autour d'une tige 4 formant un axe de rotation (X). La tige 4 peut être reliée à une poignée de préhension 5 du dispositif.

Le dispositif comporte un matériau hydrosoluble, recouvrant au moins partiellement sa surface de collecte 30, avantageusement toute la surface de collecte 30 du support. Le matériau hydrosoluble se présente sous la forme d'un gel 3 ou d'un film. Par gel, on entend un matériau qui comporte une viscosité suffisante, notamment comprise entre 500 mPa s et 50000 mPa s.

Le gel 3 est déposé sur la surface de collecte 200 du support 2, 20. Dans le cas d'un support en forme de rouleau, il est donc déposé sur la surface latérale du rouleau.

Le support 2 peut être réalisé en totalité dans un matériau non déformable, par exemple un plastique dur, ou dans un matériau déformable élastiquement, comme une mousse déformable, telle que par exemple une mousse polymère, par exemple de type polyuréthane (PU), polychlorure de vinyle (PVC), polyéthylène (PE), ou silicone.

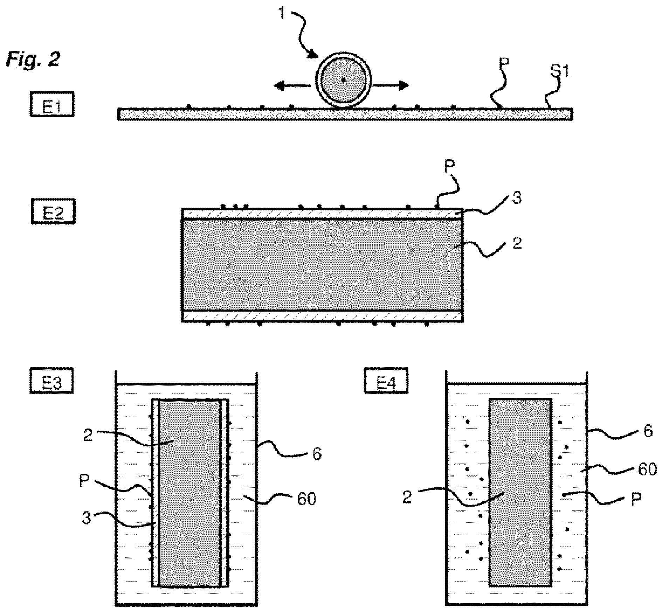

Le principe d'une collecte de particules est illustré par la figure 2.

En référence à la figure 2, les différentes étapes du procédé de collecte mis en œuvre à l'aide d'un dispositif 1 de collecte tel que décrit ci-dessus, sont les suivantes :
E1 : Le dispositif 1 est prêt à l'emploi et ne nécessite aucune préparation. Le gel 3 est en effet déjà présent sur la surface de collecte 30 du rouleau et le dispositif est toujours prêt à l'emploi.
E2 : le rouleau est apposé sur la surface S1 à prélever (surface plane ici dans cet exemple) de manière à mettre en contact le gel 3 présent sur le rouleau avec la surface S1 à prélever. Le passage du rouleau sur la surface S1 à prélever permet d'entraîner le rouleau en rotation autour de son axe (X). Lors de l'application du rouleau, les particules P présentes sur la surface S1 à prélever sont décollées de la surface à prélever et viennent coller au gel 3. Plusieurs passages peuvent être nécessaires.
E3 : Les particules P sont collectées sur la surface de collecte 30 du dispositif. Pour être récupérées, la surface de collecte est immergée au moins partiellement ou même en totalité dans une solution aqueuse 60, par exemple un tampon aqueux (ex : phosphate salin - PBS), présente dans un réservoir 6 de collecte. Pour faciliter l'immersion, le support 2 en entier peut être désolidarisé du reste du dispositif.
E4 : Pendant l'immersion de la surface de collecte, le gel 3 se dissout dans la solution aqueuse 60, libérant ainsi les particules P collectées dans la solution. Une analyse de la solution aqueuse 60 permettra ensuite d'identifier les particules P qui ont été collectées.

Selon l'invention, le gel est composé de :
- Une solution de polyvinyle alcool (PVA) ou de Polyvinylpyrrolidone (PVP) présent dans une proportion comprise entre 5% et 30% dans une solution aqueuse ;
- 10 à 50% en masse d'un composé choisi parmi :
   o un sel tel que CaCl2 ou MgCl2,
- 0 à 50% en masse de glycérol ;

Il faut noter que la présence du glycérol est optionnelle.

La solution de PVP est par exemple obtenue par dissolution de 13g de polyvinylpyrrolidone dans 150ml d'eau distillée. Après dissolution complète, on ajoute par exemple 30% en masse de glycérol, puis 20% en masse de CaCl2.

Avantageusement, une composition selon l'invention est la suivante :
- 10% à 20% de PVA ou PVP dans l'eau, puis
- 20% à 40% de glycérol, et
- 10% à 30%en masse de MgCl2 ou CaCl2 dans la solution.

Une composition préférentielle est par exemple la suivante :
- 10% de PVP ou PVA dans l'eau, puis
- 30% glycérol, et
- 20% en masse de CaCl2 dans la solution.

Selon un aspect particulier de l'invention, en ajoutant un sel tel que CaCl2 ou MgCl2, on retarde le séchage du gel et on conserve les caractéristiques collantes du matériau au cours du temps.

Le sel choisi est avantageusement celui composé de CaCl2.

Selon une particularité, le gel peut donc être déposé sur la surface de collecte du rouleau afin d'obtenir un recouvrement complet de sa surface.

La surface du rouleau ainsi recouverte est ensuite recuite à l'étuve afin de sécher le gel sur la surface du rouleau. Le rouleau est alors prêt à l'emploi. A la sortie de l'étuve le rouleau est entouré d'un film anti adhèrent pour protéger le gel collant.

Le rouleau peut être conservé à la pression atmosphérique ou déposé dans un sachet et mis sous vide.

Bien entendu, le gel pourrait être déposé sur la surface de collecte d'un dispositif de collecte ayant une autre architecture (coton-tige, brosse, éponge, sphère, billes...).

Il faut noter que la composition décrite ci-dessus pourrait être employée pour d'autres applications que la collecte de particules, comme par exemple comme hydrogel dans les mesures ECG ou EEG, ou comme colle qui ne sèche pas ou très lentement.

Le pouvoir collant de la composition a été testé lors de deux essais.

Il a d'abord été testé pour la collecte de billes de polystyrène de 5µm à 10µm de diamètre, réparties sur une surface de 1m2.

Pour les billes de polystyrène, le protocole était le suivant :
Etape n°1 : Dépôt des billes contenues dans une solution aqueuse sur la surface à traiter.
Le dépôt se fait par répartition des gouttes de liquide sur la surface ou à l'aide d'un spray qui répartit les goutes contenant les billes sur la surface.
Etape n°2 : Attente du séchage complet des gouttes contenant les billes sur la surface - 4H à température ambiante.
Etape n°3 : Passage du rouleau sur la surface.
Etape n°4 : Introduction du rouleau dans un réservoir contenant 10ml de solution aqueuse.
Etape n°5 : Agitation (30 secondes) du réservoir pour que l'eau contenue dans celui-ci soit en contact avec la surface du rouleau et dissolve le film collant.
Etape n°6 : Récupération d'un volume calibré de solution (20µl) et dépôt sur une lame de comptage.
Etape n°7 : Comptage du nombre de bille récupérées dans l'échantillon de 20µl et comparaison avec la quantité de billes déposées initialement sur la surface.

Le principe de collecte est également validé sur des spores de Bacillus thuringiensis.

Protocole utilisé pour les spores de bacillius Thiuringensis
Etape n°1 : Préparation de la solution de spores avec comptage des spores dans la solution initiale.
Etape n°2 : Le dépôt se fait par répartition sur la surface d'un volume défini (1ml) des gouttes de liquide ou à l'aide d'un spray qui répartit les goutes contenant les spores sur la surface.
Etape n°2 : Attente du séchage complet des gouttes contenant les spores sur la surface - 4H à température ambiante.
Etape n°3 : Passage du rouleau sur la surface.
Etape n°4: Introduction du rouleau dans un réservoir contenant 10ml de solution aqueuse.
Etape n°5 : Agitation (30 secondes) du réservoir pour que l'eau contenue dans celui-ci soit en contact avec la surface du rouleau et dissolve le film collant.
Etape n°6 : Dépôt sur boite de culture adaptée de 100µl de solution.
Etape n°7 : Mise dans un incubateur à 36°C pendant une nuit.

Comptage du nombre de colonies sur les boites de culture et comparaison avec les nombres de spores déposés sur la surface.

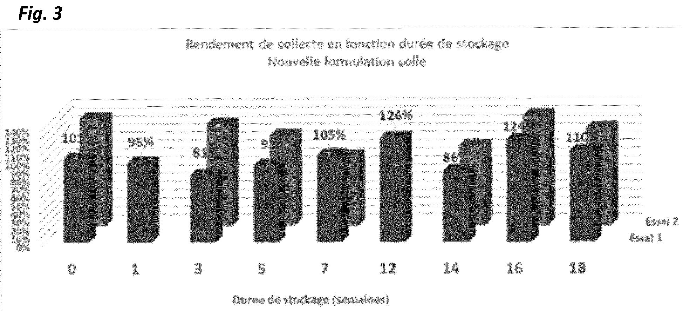

Dans les deux cas, en liaison avec la figure 3, aucune perte de rendement de collecte n'a été observée, quelle que soit la durée de stockage du rouleau. Cela signifie que le rouleau, imprégné de la composition de l'invention, a conservé son pouvoir collant au cours du temps. Sur les spores, le rouleau a par exemple permis de collecter 90% des spores répartis sur une surface de 2m2, même après une durée de 9 semaines de stockage.

L'invention présente de nombreux avantages, parmi lesquels :
- La garantie de conservation du pouvoir collant de la composition au cours du temps, même après une longue durée de stockage ;
- Une facilité de fabrication de la composition ;
- Une facilité d'utilisation de la composition ;
- Obtenir un outil prêt à l'emploi ;
- La possibilité de récupérer l'ensemble des particules collectées par le rouleau dans la solution de dissolution du gel ;

## Revendications

1. Utilisation d'une composition hydrosoluble pour la collecte de particules sur une surface, **caractérisée en ce que** ladite composition comporte :
- Une solution de polyvinyle alcool (PVA) ou de Polyvinylpyrrolidone (PVP) ;
- 10 à 50% en masse d'un composé choisi parmi :
o Un sel choisi parmi CaCl2 et MgCl2 ;

2. Utilisation selon la revendication 1, **caractérisée en ce que** la composition comporte également jusqu'à 50% en masse de glycérol.

3. Utilisation selon la revendication 1 ou 2, **caractérisée en ce que** la composition comporte : 10% à 20% de polyvinyle alcool (PVA) ou de Polyvinylpyrrolidone (PVP) dans une solution aqueuse, à laquelle on ajoute 20% à 40% en masse de glycérol et 10% à 30% en masse de sel choisi parmi Cacl2 et MgCl2.

4. Utilisation selon la revendication 1 ou 2, **caractérisée en ce que** la composition comporte :
- 10% de polyvinyle alcool (PVA) ou de Polyvinylpyrrolidone (PVP) dans l'eau, puis
- 30% en masse de glycérol, et
- 20% en masse d'un sel de Cacl2.

5. Dispositif de collecte de particules, comprenant un support présentant une surface de collecte (30) et un matériau de type hydrosoluble déposé sur sa surface de collecte, **caractérisé en ce que** le matériau hydrosoluble présente une composition hydrosoluble telle que définie dans l'une des revendications précédentes.

## Patentansprüche

1. Verwendung einer wasserlöslichen Zusammensetzung zum Sammeln von Partikeln auf einer Oberfläche, **dadurch gekennzeichnet, dass** die Zusammensetzung Folgendes enthält:
- eine Lösung von Polyvinylalkohol (PVA) oder Polyvinylpyrrolidon (PVP);
- 10 bis 50 Massen-% einer Verbindung ausgewählt aus:
• einem Salz, ausgewählt aus CaCl2 und MgCl2.

2. Verwendung nach Anspruch 1, **dadurch gekennzeichnet, dass** die Zusammensetzung außerdem bis zu 50 Massen-% Glycerin enthält.

3. Verwendung nach Anspruch 1 oder 2, **dadurch gekennzeichnet, dass** die Zusammensetzung Folgendes enthält: 10 bis 20 % Polyvinylalkohol (PVA) oder Polyvinylpyrrolidon (PVP) in einer wässrigen Lösung, der 20 bis 40 Massen-% Glycerin und 10 bis 30 Massen-% Salz, ausgewählt aus CaCl2 und MgCl2, zugesetzt werden.

4. Verwendung nach Anspruch 1 oder 2, **dadurch gekennzeichnet, dass** die Zusammensetzung Folgendes enthält:
- 10 % Polyvinylalkohol (PVA) oder Polyvinylpyrrolidon (PVP) in Wasser, dann
- 30 Massen-% Glycerin und
- 20 Massen-% eines CaCl2-Salzes.

5. Vorrichtung zum Sammeln von Partikeln, umfassend einen Träger mit einer Sammeloberfläche (30) und ein wasserlösliches Material, das auf seiner Sammeloberfläche abgeschieden ist, **dadurch gekennzeichnet, dass** das wasserlösliche Material eine wasserlösliche Zusammensetzung gemäß einem der vorhergehenden Ansprüche aufweist.

## Claims

1. Use of a water-soluble composition for the collecting of particles on a surface, **characterized in that** said composition comprises:
- a solution of polyvinyl alcohol (PVA) or of polyvinylpyrrolidone (PVP);
- from 10% to 50% by weight of a compound chosen from:
• a salt chosen from CaCl2 and MgCl₂.

2. Use according to Claim 1, **characterized in that** the composition also comprises up to 50% by weight of glycerol.

3. Use according to Claim 1 or 2, **characterized in that** the composition comprises: from 10% to 20% of polyvinyl alcohol (PVA) or of polyvinylpyrrolidone (PVP) in an aqueous solution, to which from 20% to 40% by weight of glycerol and from 10% to 30% by weight of salt chosen from CaCl₂ and MgCl₂ are added.

4. Use according to Claim 1 or 2, **characterized in that** the composition comprises:
- 10% of polyvinyl alcohol (PVA) or of polyvinylpyrrolidone (PVP) in water, then
- 30% by weight of glycerol, and
- 20% by weight of a CaCl2 salt.

5. Particle-collecting device, comprising a support exhibiting a collecting surface (30) and a material of water-soluble type deposited on its collecting surface, **characterized in that** the water-soluble material exhibits a water-soluble composition as defined in one of the preceding claims.
